# DEMANDE DE BREVET EUROPEEN

(11) **EP 2 269 805 A1**
(43) Date de publication de la demande: **05.01.2011**
(21) Numéro de dépôt: 10290312.7
(22) Date de dépôt: 10.06.2010
(51) Int. Cl.: B29C 51/16, B29C 31/00

(54) **Piston de positionnement d'un décor de pot alimentaire dans un moule, dispositif et procédé associes**

(30) Priorité: 01.07.2009 FR 0903218
(71) Demandeur: A.R.C.I.L., 95650 Puiseux Pontoise (FR)
(72) Inventeur: Bonnier, Christophe, 95350 Saint Brice sous Foret (FR)
(74) Mandataire: Corret, Hélène

(57) **Abrégé**

L'invention concerne un piston (1) de positionnement d'un décor de pot alimentaire dans un moule, un dispositif de positionnement comprenant ce piston, et un procédé de positionnement associé. Le piston (1) comprend au moins un moyen (10) pour pré-plier ou plier le décor sur toute sa hauteur.

## Description

L'invention concerne le domaine des pistons de positionnement d'un décor de pot alimentaire dans un moule.

Ces pistons sont notamment utilisés dans des machines de thermoformage de pots alimentaires.

Ces machines comprennent un moule, généralement muni de plusieurs alvéoles destinées à former chacune un pot alimentaire. Pour cela, on dispose un décor dans l'alvéole au moyen d'un piston de positionnement, puis, une fois le décor positionné dans l'alvéole, on introduit un matériau plastique préchauffé dans l'alvéole qu'on plaque ensuite contre les parois de l'alvéole par soufflage. Le matériau plastique est alors refroidi pour former un pot alimentaire en matière plastique dont la paroi est munie d'un décor.

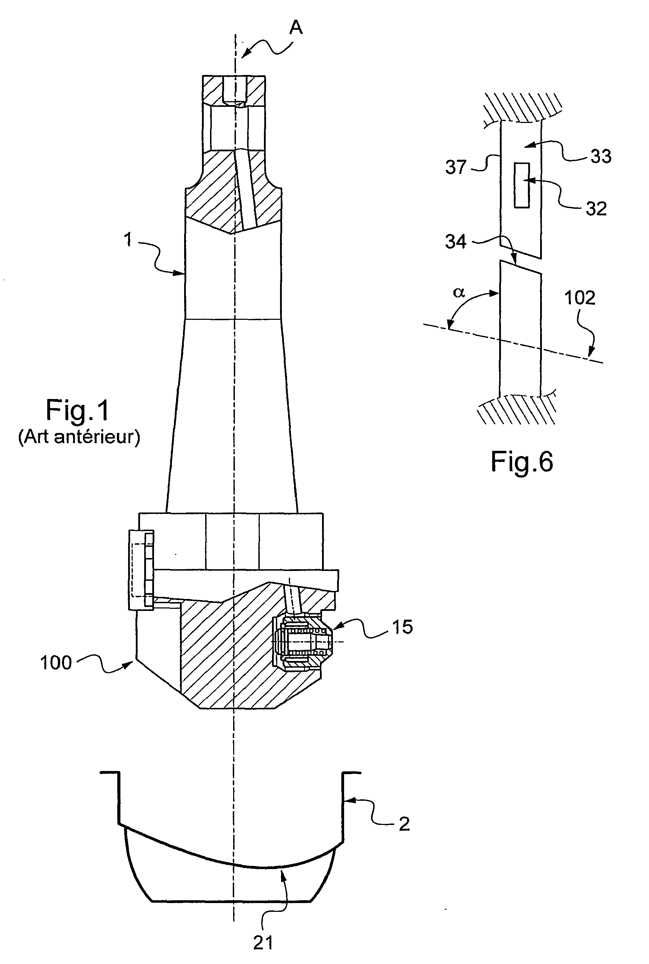

Un piston connu pour positionner le décor dans l'alvéole du moule est représenté sur la figure 1. Il est représenté avec une alvéole 2 d'un moule.

Il comporte une extrémité libre 100 dont les dimensions extérieures sont légèrement inférieures aux dimensions internes du moule de pot alimentaire.

Le piston 1 peut ainsi s'introduire sans difficulté dans une alvéole 2 en passant d'une première position, dite position haute, vers une deuxième position, dite position basse, et également s'extraire de l'alvéole 2 sans difficulté en passant de la position basse à la position haute. Pour passer de la position basse à la position haute et vice-versa, le piston se déplace le long de son axe A, généralement disposé verticalement.

Dans la position haute, le piston est capable de recevoir un décor autour de son extrémité libre.

Après que le décor a été mis en place autour de l'extrémité libre du piston, un doigt de maintien 15 est mis en oeuvre pour exercer une force sur le décor pendant la phase de découpe du décor.

Après la découpe du décor, le doigt de maintien 15 est rétracté.

Le piston 1 passe alors de sa position haute à sa position basse, en emportant le décor avec lui.

Une fois arrivé dans la position basse, l'extrémité libre du piston est disposée à l'intérieur de l'alvéole. Le décor commence à se dérouler et vient alors se plaquer contre la paroi de l'alvéole du moule.

L'alvéole 2 comporte généralement une arête circonférentielle 21. Le décor s'appuie ainsi sur l'arête de l'alvéole, et reste alors en place dans l'alvéole. L'arête empêche que le décor glisse au fond de l'alvéole sous l'effet de son poids.

Le décor présente alors une zone de recouvrement sur lui-même sur laquelle l'épaisseur de décor est doublée.

Quelle que soit la forme du moule, on constate qu'une partie du décor s'écarte sensiblement de la paroi périphérique de l'alvéole du moule au niveau de cette zone de recouvrement.

Par ailleurs, avec certains moules présentant des formes avec des coins, tel qu'une forme rectangulaire ou carrée, un écartement du décor de la paroi périphérique de l'alvéole du moule est également rencontré dans les coins de cette alvéole.

Ceci pose problème dans la mesure où il arrive régulièrement que le positionnement du décor dans l'alvéole soit modifié, voire même que le décor soit entièrement emmené vers le fond de l'alvéole malgré la présence de l'arête lorsque le matériau plastique destiné à former le pot alimentaire est introduit dans l'alvéole.

Dans une telle situation, la machine fournit un pot alimentaire dont le décor est mal positionné. Le pot alimentaire est alors inexploitable commercialement.

Un objectif de l'invention est d'améliorer le positionnement du décor dans l'alvéole du moule, pour éviter que celui-ci ne soit déplacé lors de l'introduction du matériau destiné à former le pot alimentaire.

A cet effet, l'invention propose un piston de positionnement d'un décor de pot alimentaire dans un moule, caractérisé en ce qu'il comprend au moins un moyen pour pré-plier ou plier le décor sur toute sa hauteur.

Ce piston de positionnement pourra également présenter l'une au moins des caractéristiques suivantes, prise seule ou en combinaison :
- un piston d'actionnement susceptible de se déplacer dans une chemise, entre une position de repos et une position de fonctionnement, pour pré-plier ou plier le décor, la direction de déplacement étant sensiblement perpendiculaire à l'axe du piston de positionnement ;
- un canal d'alimentation de la chemise en fluide, destiné à fournir un fluide pour assurer le déplacement du piston d'actionnement dans la chemise ;
- un moyen de rappel pour repositionner le moyen pour pré-plier ou plier le décor depuis une position de fonctionnement vers une position de repos ;
- ledit au moins un moyen pour pré-plier le décor sur toute sa hauteur présente une pluralité de poinçons s'étendant selon l'axe du piston ;
- le moyen pour plier le décor sur toute sa hauteur présente une arête vive s'étendant selon l'axe du piston ;
- un doigt de maintien logé dans une chemise, ladite chemise étant réalisée en deux pièces, l'une de ces deux pièces ne formant qu'une seule et même pièce avec la chemise du piston d'actionnement ;
- plusieurs moyens pour pré-plier ou plier le décor sur toute sa hauteur, au moins deux de ces moyens étant disposés à une même cote le long du piston de positionnement.
L'invention propose également un dispositif de positionnement d'un décor de pot alimentaire dans un moule, comprenant :
- au moins un piston de positionnement du décor dans le moule ;
- des moyens pour enrouler le décor autour du piston;
- des moyens pour couper le décor ;
caractérisé en ce que le piston comprend au moins un moyen pour pré-plier ou plier le décor sur toute sa hauteur.

Le dispositif pourra en outre prévoir l'une au moins des caractéristiques suivantes, prises seules ou en combinaison :
- une fente destinée à recevoir le moyen pour pré-plier ou plier le décor, lorsqu'il effectue une opération de pré-pliage ou de pliage ;
- la fente est une fente d'introduction du décor autour du piston de positionnement ;
- le moyen pour pré-plier ou plier le décor est positionné au sein du piston de sorte que l'angle α formé entre, d'une part, l'axe de translation dudit moyen et d'autre part, la paroi d'une plaque faisant face au piston est comprise dans une gamme allant de 60° à 80°, l'angle α étant choisi dans cette gamme afin que le moyen pour pré-plier ou plier le décor puisse s'insérer dans la fente.

L'invention propose également un procédé de positionnement d'un décor de pot alimentaire dans un moule avec un dispositif selon l'invention, dans lequel on effectue une étape de pré-pliage ou de pliage du décor.

Le procédé pourra comprendre la série d'étapes suivantes :
- enrouler le décor autour du piston de positionnement du décor dans le moule ; puis
- couper le décor, puis après avoir effectué l'étape de pré-pliage ou de pliage du décor ;
- positionner le décor dans le moule.

En variante, le procédé pourra prévoir la série d'étapes suivantes :
- enrouler le décor autour d'un piston de positionnement du décor dans le moule, préalablement à l'étape de pliage ou de pré-pliage ; puis, après avoir effectué l'étape de pliage ou de pré-pliage ;
- couper le décor, avant de le positionner finalement dans le moule.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 2 représente une vue de côté de deux pistons de positionnement d'un décor dans une alvéole respective de moule, l'un des pistons étant dans sa position haute sur la figure 2(a), l'autre étant dans sa position basse sur la figure 2(b) ;
- la figure 3 comprend les figures 3(a) et 3(b) représentant respectivement la vue de coupe A-A de la figure 2(a) et la vue de coupe B-B de la figure 2(b) ;
- la figure 4 comprend les figures 4(a) à 4(d) représentant la disposition d'un décor dans le moule en l'absence de pliage sur la figure 4(a), la disposition d'un décor dans le moule avec un pliage réalisé à une distance trop faible de l'extrémité du décor sur la figure 4(b), la disposition d'un décor dans le moule avec un pliage réalisé à une distance trop importante de l'extrémité du décor sur la figure 4(c), et la disposition d'un décor dans le moule avec un pliage réalisé à une distance optimale de l'extrémité du décor sur la figure 4(d);
- la figure 5, qui comprend les figures 5(a) et 5(b), représente une vue de coupe partielle d'un dispositif de positionnement d'un décor de pot alimentaire dans un moule muni de pistons conformes à ceux des figures 2 et 3, lesquels sont représentés dans leur position haute, le piston étant représenté après l'enroulement du décor sur la figure 5(a), et représenté avant l'enroulement du décor sur la figure 5(b) ;
- la figure 6 est un schéma sur lequel on a représenté l'angle α caractérisant la position d'un doigt plieur du dispositif de la figure 5(b) par rapport à ce dispositif.

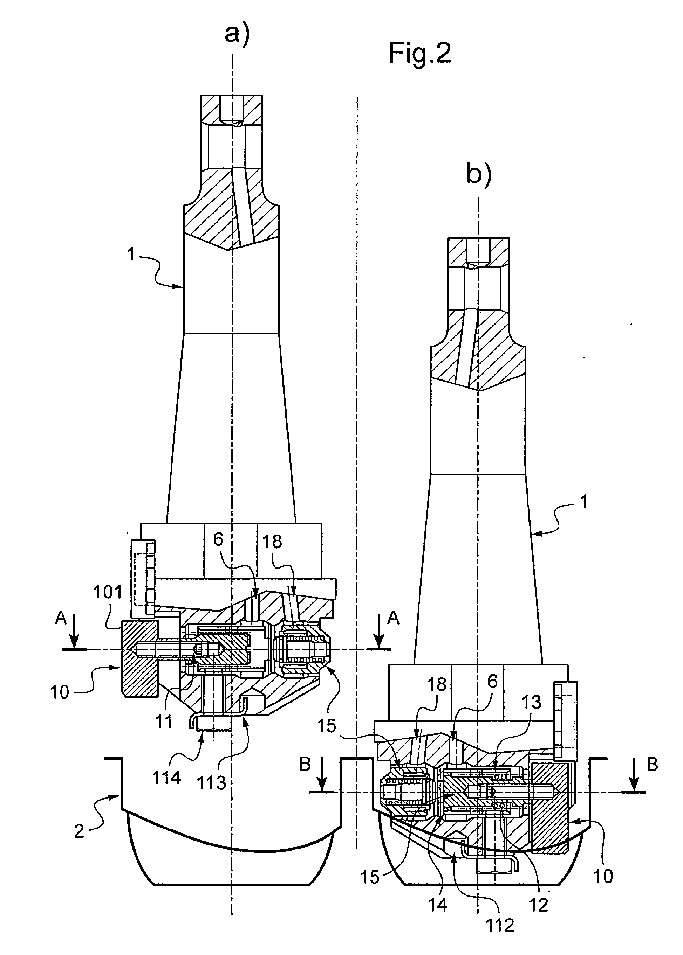

La figure 2 représente une vue de côté d'un piston de positionnement 1 d'un décor dans une alvéole de moule, le piston étant dans sa position haute sur la figure 2(a), et dans sa position basse sur la figure 2(b). Entre les deux positions, le piston effectue un mouvement de translation selon l'axe longitudinal du piston.

Le piston 1 comprend au moins un moyen 10 pour plier le décor. Ce moyen 10 est par exemple un doigt plieur comme représenté sur les figures annexées. Le doigt plieur 10 présente une arête vive 101 s'étendant sur toute sa hauteur.

Le doigt plieur 10 possède deux positions extrêmes, l'une étant une position de repos, l'autre étant une position de fonctionnement.

La position de repos du doigt plieur 10 est représentée sur les figures 2(b), 3(b) et 5(b). La position de fonctionnement du doigt plieur 10 est quant à elle représentée sur les figures 2(a), 3(a) et 5(a).

L'actionnement du doigt plieur 10 et du piston de positionnement 1 est distinct. Toutefois, pour que le piston 1 fonctionne correctement, le positionnement du doigt plieur 10 en fonction de la position du piston 1 est le suivant.

Lorsque le piston 1 est en position haute et qu'un décor vient d'être enroulé autour du piston 1, le doigt plieur 10 est alors dans sa position de repos.

Puis, le décor est coupé comme cela sera précisé ultérieurement.

Le doigt plieur 10 est alors déplacé par un moyen d'actionnement 11 dans sa position de fonctionnement de la figure 2(a) pour effectuer le pliage du décor.

Une fois ce pliage effectué, le moyen d'actionnement 11 replace le doigt plieur 10 dans sa position de repos, le piston 1 étant alors toujours dans sa position haute.

Le doigt plieur 10 reste alors dans sa position de repos lors du passage du piston 1 depuis sa position haute vers sa position basse et lors de la remontée depuis sa position basse vers sa position haute.

Un nouveau cycle peut alors commencer.

Le moyen d'actionnement 11, qui permet de déplacer le doigt plieur 10 depuis une position de repos vers une position de fonctionnement et inversement est par exemple un piston monté rigidement sur le doigt plieur 10.

Ce piston d'actionnement 11 est susceptible de se déplacer dans une chemise 13 dans un mouvement axial selon un axe sensiblement perpendiculaire à l'axe de déplacement du piston 1 entre ses positions haute et basse. L'axe de déplacement du piston se confond avec son axe longitudinal.

La chemise 13 comprend notamment une paroi d'extrémité 131 de la chemise 13 correspondant au fond de la chemise 13. A l'opposé de cette paroi d'extrémité 131, la chemise 13 comporte une ouverture 132.

Le déplacement du piston d'actionnement 11 est assuré par la mise sous pression de la chemise 13, par l'intermédiaire d'un canal d'alimentation en fluide 6 débouchant dans la chemise.

Pour que la mise sous pression soit effective, la chemise 13 doit être étanche. Cette étanchéité est notamment assurée par la mise en oeuvre d'une chemise 13 dont la paroi est doublée et par la présence d'un joint d'étanchéité torique 141. Ce joint torique 141 est disposé entre la chemise 13 et le piston d'actionnement 11 pour éviter que le fluide apporté par le canal d'alimentation 6 ne sorte de la chemise 13 et se dirige dans un volume intérieur du piston 1 de positionnement.

Cette étanchéité est également assurée par d'autres joints 14 disposés entre la paroi externe de la chemise 13 et la paroi interne du piston 1. Ainsi, si le joint torique 141 fait défaut, les joints 14 offrent une étanchéité entre le piston de positionnement 1 et la chemise 13.

Le déplacement du piston d'actionnement 11 dans la chemise 13 n'est alors assuré qu'à partir du moment où la pression de fluide exercée sur la surface utile du piston d'actionnement 11 excède une force de rappel exercée sur le piston d'actionnement 11 par un moyen de rappel 12 également logé dans la chemise 13.

Le piston 1 comporte en effet un moyen de rappel 12 qui est par exemple un ressort de rappel hélicoïdal logé entre une paroi du piston d'actionnement 11 et la paroi interne 111 du piston de positionnement 1 faisant face au piston d'actionnement 11.

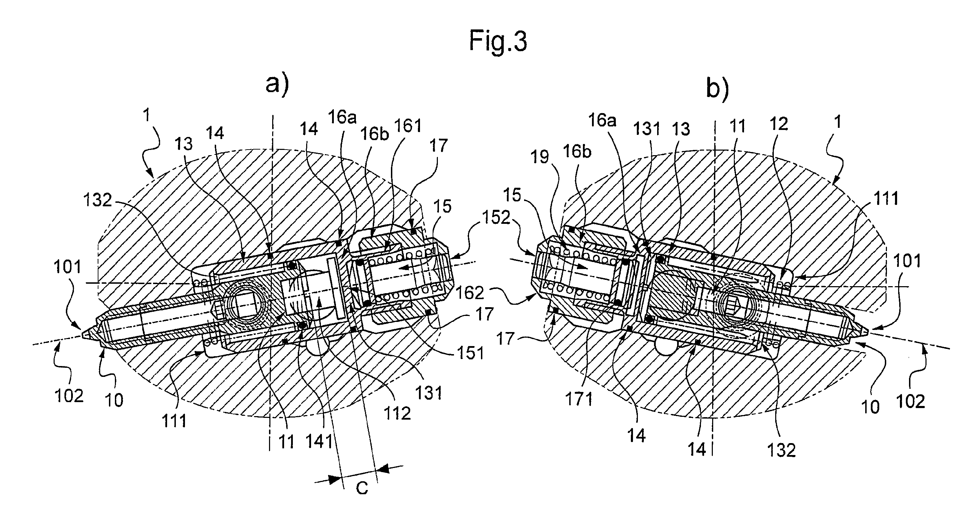

Dans la position de repos du doigt plieur 10 illustrée sur les figures 2(b) et 3(b), aucun fluide n'est amené dans la chemise 13. Dans cette position, le piston d'actionnement 11 est logé au fond de la chemise 13 sous l'action de la force de rappel exercée par le ressort 12. Le ressort 12 maintient ainsi le piston d'actionnement 11 au contact de la paroi d'extrémité 131 de la chemise 13.

Dans la position de fonctionnement du doigt plieur 10, un fluide est amené dans la chemise 13 à une pression suffisante pour provoquer le déplacement du piston d'actionnement 11 qui n'est alors plus logé au fond de la chemise, comme représenté sur les figures 2(a) et 3(a).

Par position de fonctionnement, il faut comprendre la position du doigt plieur 10 dans laquelle celui-ci peut effectuer le pliage d'un décor.

La course C du piston d'actionnement 11, représentée sur la figure 3(a), entre les positions de repos et de fonctionnement du doigt plieur 10 est en général inférieure à 10mm, et de préférence voisine de 7mm.

En variante, on pourrait prévoir que le déplacement du piston d'actionnement 11 est réalisé par une alimentation électrique, et non fluidique. De manière analogue, on pourrait prévoir que le moyen de rappel 12 fonctionne par une action magnétique, électrique, pneumatique ou hydraulique.

On notera que l'élément 112 de la figure 3 correspond au lamage de la figure 2(b), lequel permet d'accueillir une rondelle 113 pour la vis de maintien 114.

Le piston 1 comporte également un doigt de maintien 15 du décor.

Ce doigt de maintien 15 est représenté dans sa position de repos sur l'ensemble des dessins annexés.

L'actionnement du doigt de maintien 15 et du piston de positionnement 1 du décor dans le moule est distinct. Toutefois, pour que le piston 1 fonctionne correctement, le positionnement du doigt de maintien 15 en fonction de la position du piston 1 est le suivant.

Lorsque le piston 1 est en position haute et qu'un décor vient d'être enroulé autour du piston 1, le doigt de maintien 15 est alors dans sa position de repos de la figure 2(a).

Puis, le doigt de maintien 15 est déplacé vers sa position de fonctionnement pour maintenir le décor en position par rapport au piston 1.

La découpe du décor est alors effectuée.

Puis, le doigt de maintien 15 est à nouveau positionné dans sa position de repos, le décor étant disposé autour de l'extrémité libre du piston 1.

Le doigt de maintien 15 reste alors dans sa position de repos lors du passage du piston 1 depuis sa position haute vers sa position basse, laquelle est représentée sur la figure 2(b).

Le décor est alors déposé dans le moule, le doigt de maintien restant dans sa position de repos.

Cette position de repos est conservée pendant toute la remontée du piston 1 vers sa position haute.

Un nouveau cycle peut alors commencer.

Le doigt de maintien 15 est logé dans une chemise 16 qui est réalisée en deux pièces 16a, 16b de type mâle/femelle vissées l'une à l'autre, au niveau de la zone référencée 161.

En fonctionnement, l'extrémité 152 du doigt de maintien 15 sort du piston de positionnement 1 (non représenté).

Au contraire, au repos, le doigt de maintien 15 est à l'intérieur du piston 1. Plus précisément, l'une des extrémités 151 du doigt de maintien est au contact de la paroi 131, par l'une de ses faces. La paroi 131 est également susceptible d'être en contact, par son autre face, avec le doigt plieur 10.

L'une 16a des pièces 16a, 16b de la chemise 16 est formée par une cavité cylindrique dont les parois sont faites d'une seule pièce avec la chemise 13 du piston d'actionnement 11. Le fond de la pièce 16a de la chemise 16 correspond à la paroi 131 contre laquelle le doigt de maintien 15 est maintenu lorsqu'il est en position de repos.

On pourrait envisager deux chemises 13 et 16 indépendantes. Cependant, la conception consistant à avoir une paroi commune aux deux chemises 13, 16 est compacte et peu coûteuse.

L'autre pièce 16b de la chemise 16 comporte un bouchon 162 débouchant sur l'extérieur du piston de positionnement 1.

Le déplacement du doigt de maintien 15 est assuré par la mise sous pression de la chemise 16. Pour que la mise sous pression soit effective, la chemise 16 doit être étanche. Cette étanchéité est notamment assurée par la présence d'un joint torique 171, disposé entre le doigt de maintien 15 et la chemise 16. Ce joint 171 empêche ainsi le passage de fluide entre la chemise 16 et le volume interne du piston 1 de positionnement.

D'autres joints d'étanchéité 17 sont également prévus entre la paroi externe de la chemise 16 et le corps de piston 1.

Pour réaliser la mise sous pression de la chemise 16, le piston 1 comporte un autre canal d'alimentation en fluide 18, dédié au doigt de maintien 15. Le canal 18 est ainsi indépendant du canal d'alimentation en fluide 6 du piston d'actionnement 11.

Le déplacement du doigt de maintien 15 dans la chemise 16 n'est alors assuré qu'à partir du moment où la pression de fluide exercée sur la surface utile du doigt de maintien 15 excède une force de rappel exercée sur le doigt de maintien 15 par un moyen de rappel 19 également logé dans la chemise 16.

Le piston 1 comporte en effet un autre moyen de rappel 19 qui est par exemple un ressort de rappel logé entre une paroi du doigt de maintien 15 et le bouchon 162 de la chemise 16.

Dans la position de repos du doigt de maintien 15, aucun fluide n'est amené dans la chemise 16. Dans cette position, le doigt de maintien 15 est logé au fond de la chemise 16, à savoir contre la paroi 131, sous l'action de la force de rappel exercée par le ressort 19.

Dans la position de fonctionnement du doigt de maintien 15, un fluide est amené dans la chemise 16 à une pression suffisante pour provoquer le déplacement du doigt de maintien 15. Le doigt de maintien 15 n'est alors plus logé au fond de la chemise, et permet d'exercer une force de maintien sur le décor pour que celui-ci ne glisse pas le long du piston 1 pendant la coupe du décor.

Pour effectuer un pliage efficace du décor, l'arête vive 101 du doigt plieur 10 présente une hauteur supérieure ou égale à celle du décor à plier. De préférence, l'arête vive 101 s'étend par ailleurs sur toute la hauteur du doigt plieur 10.

Le pliage réalisé par le doigt plieur 10 doit être effectué à une distance d'une extrémité du décor qui est prédéterminée en fonction de différents paramètres. Ces paramètres sont la forme et la nature du moule dans lequel le décor est destiné à être positionné, le grammage et la nature du décor envisagé et la localisation prévue de la zone de recouvrement du décor par rapport au moule.

Nous détaillons ci-dessous un exemple de pliage réalisé avec le doigt plieur 10 selon l'invention.

### Exemple :

Le moule utilisé présente des alvéoles de formes sensiblement elliptiques afin de former un pot de forme elliptique et est réalisé en polystyrène.

Le décor employé est réalisé en papier paraffiné et son grammage est de 90g/m².

La localisation de la zone de recouvrement du décor est prévue sur le grand axe du pot alimentaire. Avec cette localisation, la zone de recouvrement n'est alors pas visible par le consommateur.

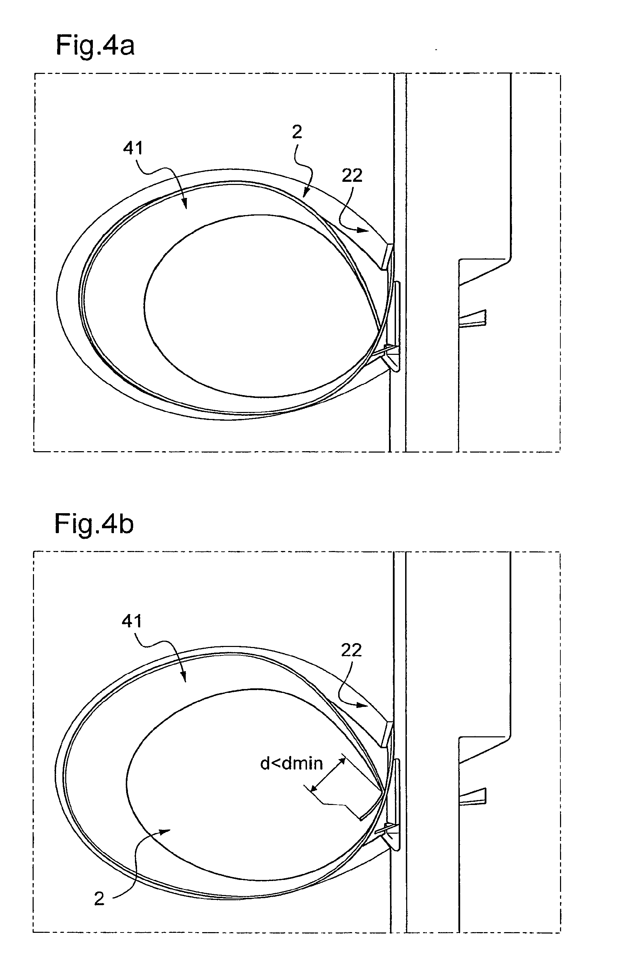

Pour cela, on introduit le décor dans une alvéole du moule de façon à ce que le grand axe de l'alvéole passe par la zone de recouvrement du décor. C'est par exemple le cas sur les figures 4(a) à 4(d) sur lesquelles l'alvéole représentée est identique d'une figure à l'autre.
La figure 4(a) représente la disposition d'un décor 41 dans le moule en l'absence de pliage, tel que cela est réalisé dans l'art antérieur. On constate qu'une partie du papier décor s'écarte sensiblement de la paroi interne 22 de l'alvéole. Ce problème est d'autant plus important que, le grand axe de l'alvéole passant par la zone de recouvrement du décor, cette zone de recouvrement se situe sur la partie de courbure la plus élevée de l'alvéole.
Les figures 4(b) à 4(d) représentent quant à elles des pliages effectués à différentes distances de l'extrémité du décor. On a pu constater qu'il existe une gamme de distances optimales pour laquelle le pliage permet, au niveau de la zone de recouvrement du moule, de rapprocher le décor de la paroi du moule par rapport à un décor n'ayant subi aucun pliage.

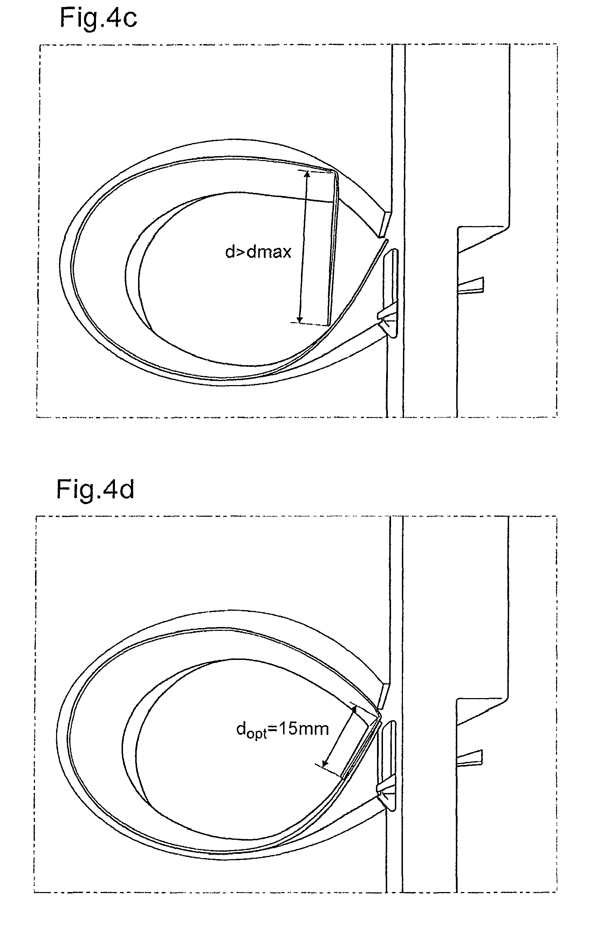

Une distance dₒₚₜ comprise dans cette gamme de distances optimales [dₘᵢₙ; dₘₐₓ] est par exemple représentée sur la figure 4(d). Dans l'exemple considéré ici, on peut définir les valeurs dₘᵢₙ = 13mm et dₘₐₓ = 17mm, la distance optimale représentée sur la figure 4(d) valant dₒₚₜ = 15mm. Sur cette figure 4(d), on remarque que la zone de recouvrement du décor 41 est proche de la paroi 22 de l'alvéole, le recouvrement du décor sur lui-même étant par ailleurs obtenu.

Incidemment, et comme représenté sur la figure 4(d), le pliage effectué à la distance optimale dₒₚₜ d'une première extrémité du décor se situe à proximité de la deuxième extrémité du décor.

En revanche, les figures 4(b) et 4(c) représentent respectivement une distance trop faible d < dₘᵢₙ et trop importante d > dₘₐₓ. Sur ces figures 4(b) et 4(c), on remarque, au contraire, qu'une partie du décor 41 reste situé à distance de la paroi 22 de l'alvéole, sur une partie de la paroi périphérique du moule.

L'homme du métier comprendra que la gamme de valeurs de distances optimales mentionnée ci-dessus pourra être obtenue en effectuant des essais successifs, compte tenu des différents paramètres à prendre en compte selon l'application considérée.

Pour effectuer le pliage, l'invention prévoit un dispositif de positionnement comportant les pistons de positionnement 1, par exemple représentés sur la figure 2.

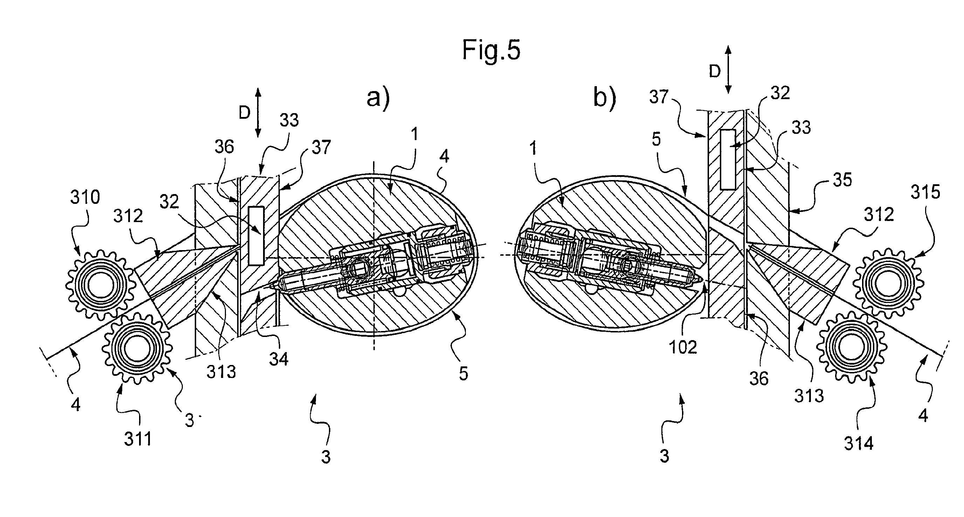

Ce dispositif de positionnement d'un décor de pot alimentaire dans un moule est par exemple représenté sur les figures 5(a) et 5(b) selon des vues de coupes partielles.

Le dispositif 3 est muni de pistons 1 conformes à ceux décrits à l'appui des figures 2 et 3.

Le dispositif 3 de positionnement comprend notamment une pluralité de pistons 1 de positionnement du décor dans le moule, des moyens 31 pour enrouler le décor autour de chaque piston 1 et des moyens 32 pour couper le décor.

Les moyens 31 pour enrouler le décor autour du piston et les moyens 32 pour couper le décor sont actifs lorsque le piston de positionnement 1 est dans sa position haute.

Le décor est amené vers le piston 1 sous la forme d'une bande 4 défilant entre deux rouleaux lisses 314, 315 actionnés par deux roues dentées 310, 311 correspondantes disposées au-dessus des rouleaux 314, 315. En sortie des rouleaux lisses 314, 315, la bande 4 est guidée vers le piston 1 par des mâchoires 312, 313 orientées de telle sorte que le décor arrive tangentiellement à la paroi périphérique externe du piston 1.

L'enroulement du décor autour du piston 1 est assuré par la présence d'un conformateur 5 du piston 1, qui force la bande 4 à se conformer à la paroi périphérique externe du piston 1. En effet, l'introduction de la bande de décor s'effectue entre la paroi externe du piston 1 et la paroi interne du conformateur 5.

Les moyens 32 pour couper le décor servent à délimiter une longueur de bande déterminée de sorte que le décor entoure le piston 1 avec une zone de recouvrement de ce décor sur lui-même.

Ces moyens 32 peuvent être des couteaux disposés à l'intérieur d'une plaque porte-couteaux 33.

Cette plaque 33 est interposée entre un élément 35 de châssis du dispositif et le conformateur 5 du piston 1. L'élément 35 de châssis et la plaque 33 s'étendent parallèlement l'une contre l'autre.

Les couteaux sont toutefois situés à proximité de la bande 4 et la plaque 33 est susceptible de se translater pour venir au contact de la bande 4 et effectuer la coupe.

Cette translation s'effectue selon une direction qui est à la fois parallèle au plan de contact 36 entre l'élément 35 de châssis et la plaque 33 et perpendiculaire à l'axe de translation du piston de positionnement 1. Cette direction est représentée par la flèche D sur les figures 5(a) et 5(b).

La plaque 33 comprend également une fente 34 d'introduction du décor autour du piston de positionnement 1. Elle sert également de surface d'appui à l'extrémité de décor, lorsque ce dernier a été enroulé autour du piston 1 de positionnement.

La fente d'introduction du décor 34 est utilisée par le doigt plieur 10 pour effectuer le pliage. Dans ce cas, la course du doigt plieur 10 n'est pas limitée par la présence de la plaque 33. La présence de cette fente d'introduction du décor 34 permet ainsi d'améliorer l'efficacité du pliage du décor.

Pour s'assurer que le pliage du décor s'effectue dans la gamme de distances optimales [dₘᵢₙ; dₘₐₓ], on effectue les opérations qui suivent, avec le dispositif représenté sur la figure 5.

On règle tout d'abord le taux d'enroulement du décor autour du piston de positionnement 1.

Le taux d'enroulement du décor autour du piston est défini par la partie périphérique du piston de positionnement qui est entourée par le décor. Ce taux est strictement supérieur à l'unité pour obtenir une zone de recouvrement du décor.

Une fois ce taux d'enroulement déterminé, on effectue plusieurs essais de positionnement du doigt plieur 10 par rapport au décor.

A cet effet, on fixe l'angle α formé entre la paroi 37 de la plaque 33 faisant face au piston 1 et l'axe de translation 102 du doigt plieur 10 à une première valeur, et on détermine si la distance entre l'extrémité du décor et la zone de pliage permet d'atteindre le but recherché, et ainsi de suite pour différentes valeurs de l'angle α. L'angle α a été schématisé sur la figure 6, en référence à la figure 5(b).

Le doigt plieur 10 a donc été installé dans le piston 1 de positionnement selon différents angles α.

Les essais ont montré que l'angle α devait être compris dans la gamme d'angles [αₘᵢₙ; αₘₐₓ] = [60°; 80°] pour obtenir la gamme de distances optimales [dₘᵢₙ; dₘₐₓ]= [13mm; 17mm]. En particulier, la valeur d'angle α = 70° correspond à la distance dₒₚₜ= 15mm représentée sur la figure 4(d).

La gamme d'angles α ainsi définie permet également d'aligner l'axe de déplacement 102 du doigt plieur 10 avec la fente 34.

La distance optimale dₒₚₜ ainsi déterminée est conservée pour les opérations de production des pots de yaourt.

### Fin de l'exemple.

Les essais réalisés pour déterminer la gamme de distances optimales pourraient être effectués autrement.

En effet, l'exemple mentionné ci-dessus met à profit la fente d'introduction 34 du décor pour le pliage.

Cependant, on peut envisager qu'une autre fente (non représentée), destinée à recevoir le doigt plieur 10, soit aménagée dans la plaque 33 ou encore dans la paroi du conformateur 5. Dans ce cas, la fente 34 sert uniquement à l'introduction du décor autour du piston 1.

En fonction de la position de la fente, on peut alors prévoir que l'angle α se situe dans une gamme de valeurs comprises entre 60° et 120°.

Cette variante, bien qu'elle mette en oeuvre une fente additionnelle, est intéressante. En effet, on note que la gamme comprise entre 60° et 120° est centrée sur l'angle droit. Or, plus l'angle entre l'axe de déplacement 102 du doigt plieur 10 et le décor, disposé contre la plaque 33, est droit, plus le pliage sera de qualité.

Par ailleurs, pour déterminer la gamme de distances optimales, le dispositif représenté sur la figure 5 pourrait mettre en oeuvre un angle α constant pour l'ensemble des essais, et faire varier le taux d'enroulement du décor autour du piston 1 de positionnement d'un essai à l'autre.

Pour positionner le décor dans une alvéole du moule conformément à l'invention avec le dispositif représenté sur la figure 5, on effectue alors les étapes suivantes :
(a) on enroule la bande 4 de décor autour du piston 1.
   Pour cela, la plaque 33 doit être positionnée de sorte que la fente 34 soit située dans le prolongement des mâchoires 312, 313. A l'issue de cet enroulement, l'extrémité du décor est plaquée entre la plaque 33 et le piston, le reste du décor faisant le tour du piston 1 de positionnement, comme représenté sur la figure 5(b).
(b) on dispose le doigt de maintien 15 dans sa position de fonctionnement pour qu'il maintienne le décor.
(c) on coupe le décor en translatant la plaque porte-couteaux 33 afin que les couteaux 32 viennent découper la bande de décor.
(d) on plie le décor avec le doigt plieur 10.

A cet effet, le doigt plieur 10 met à profit la fente 34 d'introduction du décor. A l'issue de cette étape, le dispositif se situe dans la position représentée sur la figure 5(a).
(e) on déplace le doigt de maintien 15 et le doigt plieur 10 dans leurs positions de repos respectives.
(f) enfin, on positionne le décor dans le moule en faisant passer le piston 1 depuis sa position haute vers sa position basse.

En variante, il est possible de prévoir que l'étape de pliage s'effectue entre l'étape d'introduction du décor autour du moule et l'étape de coupe.

En variante, la fente 34 pourrait prévoir une arête vive affûtée pour assurer la découpe de la bande de décor. Dans ce cas, les moyens pour couper le décor sont formés par cette arête vive et les couteaux décrits ci-dessus ne sont plus nécessaires.

Les étapes mentionnées ci-dessus sont générales et peuvent s'appliquer à toute variante de réalisation de l'invention.

Par ailleurs, le doigt plieur 10 présenté précédemment comporte une arête vive 101 s'étendant sur une hauteur permettant de couvrir la hauteur du décor pour effectuer un pliage du décor sur toute sa hauteur.

En variante, il est toutefois possible d'envisager un doigt plieur 10 présentant une pluralité de poinçons s'étendant selon l'axe du piston. Ceci permet non plus de plier le décor sur sa hauteur, mais d'effectuer un pré-pliage de ce décor, en créant une série de défauts ponctuels à la surface du décor, cette série de défauts formant ainsi une ligne de faiblesse. En fonction de la force appliquée par les poinçons, ceux-ci peuvent aller jusqu'à percer ponctuellement la surface du décor. Selon cette variante, le véritable pliage du décor s'effectue lors de la mise en place du décor dans l'alvéole du moule, ce dernier imprimant, du fait de sa conformation non plane, une contrainte au décor l'amenant à se plier le long de sa ligne de faiblesse.

De plus, dans toute la description qui précède, le moule présente des alvéoles arrondies, par exemple de forme elliptique.

Cependant, on pourrait prévoir que les alvéoles présentent une forme rectangulaire ou carrée. Dans ce cas, les problèmes d'éloignement du décor de la paroi du moule se situent au niveau des coins de ce moule. Il suffit alors de réaliser les pliages afin que les zones pliées du décor puissent être ultérieurement installées au niveau des coins du moule.

A cet effet, il est possible d'employer un dispositif 3 conforme à l'invention dont le piston de positionnement 1 comprend quatre doigts plieurs du type du doigt plieur 10 décrit précédemment, lesquels sont répartis autour de l'axe A du piston de positionnement du décor.

Ainsi, si le pot dans lequel le décor est destiné à être installé est carré, les quatre doigts plieurs seront répartis uniformément autour de l'axe A du piston de positionnement du décor, en faisant des angles droits l'un par rapport à l'autre.

Pour ces pots présentant des angles vifs (pots carrés, rectangulaires ou autres formes), les endroits où des pliages doivent être réalisés correspondent aux quatre coins de l'alvéole du moule, lesquels sont facilement identifiables. Les essais préalables pour déterminer une gamme de distances optimales entre l'extrémité du décor et la zone de pliage visent donc simplement à affiner la position du pliage par rapport à l'extrémité du décor.

Chaque chambre d'un doigt plieur peut être alimentée par un canal d'alimentation en fluide qui lui est propre. L'ensemble des chambres associé à chacun des doigts plieurs peut cependant être alimenté par un canal d'alimentation commun, pour actionner les quatre doigts plieurs 10 en même temps.

En revanche, un seul doigt de maintien est nécessaire, lequel peut être disposé entre deux doigts plieurs, sur le pourtour du piston de positionnement.

En variante, le doigt de maintien peut être disposé à une cote différente de celle des quatre doigts plieurs le long du piston de positionnement.

En variante, et pour des raisons d'encombrement, il est envisageable de disposer deux doigts plieurs à une première cote du piston de positionnement et de disposer les deux autres doigts plieurs à une deuxième cote du piston de positionnement. Dans ce cas, les doigts plieurs installés à une même cote sont de préférence dans une position diamétralement opposée.

Le nombre de doigts plieurs s'adapte à la forme du pot dans lequel le décor est destiné à être positionné. Il existe par exemple des pots hexagonaux pour lesquels il est préférable de prévoir six doigts plieurs. Ceux-ci seront de préférence disposés à plusieurs cotes, pour des raisons d'encombrement liées au volume interne limité du piston de positionnement.

Là encore, chaque doigt plieur 10 peut prévoir une arête vive 101 pour effectuer un pliage sur toute la hauteur du décor ou bien prévoir une pluralité de poinçons pour effectuer un pré-pliage, les coins de l'alvéole permettant alors d'effectuer le pliage lorsque le décor y est disposé.

## Revendications

1. Piston (1) de positionnement d'un décor de pot alimentaire dans un moule, **caractérisé en ce qu'**il comprend au moins un moyen (10) pour pré-plier ou plier le décor sur toute sa hauteur.

2. Piston (1) de positionnement d'un décor de pot alimentaire dans un moule selon la revendication 1, dans lequel il est prévu un piston d'actionnement (11) susceptible de se déplacer dans une chemise (13), entre une position de repos et une position de fonctionnement, pour pré-plier ou plier le décor, la direction de déplacement étant sensiblement perpendiculaire à l'axe du piston (1) de positionnement.

3. Piston (1) de positionnement d'un décor de pot alimentaire dans un moule selon la revendication précédente, dans lequel, il est en outre prévu un canal d'alimentation (6) de la chemise (13) en fluide, destiné à fournir un fluide pour assurer le déplacement du piston d'actionnement (11) dans la chemise (13).

4. Piston (1) de positionnement d'un décor de pot alimentaire dans un moule selon l'une des revendications précédentes, dans lequel il est prévu un moyen de rappel (12) pour repositionner le moyen (10) pour pré-plier ou plier le décor depuis une position de fonctionnement vers une position de repos.

5. Piston (1) de positionnement d'un décor de pot alimentaire dans un moule selon l'une des revendications précédentes, dans lequel ledit au moins un moyen (10) pour pré-plier le décor sur toute sa hauteur présente une pluralité de poinçons s'étendant selon l'axe du piston.

6. Piston (1) de positionnement d'un décor de pot alimentaire dans un moule selon l'une des revendications 1 à 4, dans lequel le moyen (10) pour plier le décor sur toute sa hauteur présente une arête vive (101) s'étendant selon l'axe du piston.

7. Piston (1) de positionnement d'un décor de pot alimentaire dans un moule selon l'une des revendications 2 à 6, dans lequel il est prévu un doigt de maintien (15) logé dans une chemise (16), ladite chemise (16) étant réalisée en deux pièces (16a, 16b), l'une (16a) de ces deux pièces ne formant qu'une seule et même pièce avec la chemise (13) du piston d'actionnement (11).

8. Piston (1) de positionnement d'un décor de pot alimentaire dans un moule selon l'une des revendications précédentes, dans lequel il est prévu plusieurs moyens (10) pour pré-plier ou plier le décor sur toute sa hauteur, au moins deux de ces moyens étant disposés à une même cote le long du piston de positionnement (1).

9. Dispositif (3) de positionnement d'un décor de pot alimentaire dans un moule, comprenant :
- au moins un piston (1) de positionnement du décor dans le moule ;
- des moyens (31) pour enrouler le décor autour du piston (1) ;
- des moyens (32) pour couper le décor ;
**caractérisé en ce que** le piston (1) comprend au moins un moyen (10) pour pré-plier ou plier le décor sur toute sa hauteur.

10. Dispositif de positionnement d'un décor de pot alimentaire dans un moule selon la revendication précédente, dans lequel il est prévu une fente destinée à recevoir le moyen (10) pour pré-plier ou plier le décor, lorsqu'il effectue une opération de pré-pliage ou de pliage.

11. Dispositif de positionnement d'un décor de pot alimentaire dans un moule selon la revendication précédente, dans lequel la fente est une fente (34) d'introduction du décor autour du piston (1) de positionnement.

12. Dispositif de positionnement d'un décor de pot alimentaire dans un moule selon la revendication précédente, dans lequel le moyen (10) pour pré-plier ou plier le décor est positionné au sein du piston (1) de sorte que l'angle α formé entre, d'une part, l'axe de translation (102) dudit moyen (10) et d'autre part, la paroi (37) d'une plaque (33) faisant face au piston (1) est comprise dans une gamme allant de 60° à 80°, l'angle α étant choisi dans cette gamme afin que le moyen (10) pour pré-plier ou plier le décor puisse s'insérer dans la fente (34).

13. Procédé de positionnement d'un décor de pot alimentaire dans un moule avec un dispositif selon l'une des revendications 9 à 12, dans lequel on effectue une étape de pré-pliage ou de pliage du décor.

14. Procédé de positionnement d'un décor de pot alimentaire dans un moule selon la revendication précédente, dans lequel il est en outre prévu les étapes consistant à :
- enrouler le décor autour du piston de positionnement du décor dans le moule ; puis
- couper le décor, puis après avoir effectué l'étape de pré-pliage ou de pliage du décor ;
- positionner le décor dans le moule.

15. Procédé de positionnement d'un décor de pot alimentaire dans un moule selon la revendication 13, dans lequel il est en outre prévu les étapes consistant à :
- enrouler le décor autour d'un piston de positionnement du décor dans le moule, préalablement à l'étape de pliage ou de pré-pliage ; puis, après avoir effectué l'étape de pliage ou de pré-pliage ;
- couper le décor, avant de le positionner finalement dans le moule.
